(19) Europäisches Patentamt
European Patent Office
Office européen des brevets

(11) EP 4 361 191 A1

(12) **EUROPEAN PATENT APPLICATION**
published in accordance with Art. 153(4) EPC

(43) Date of publication:
**01.05.2024 Bulletin 2024/18**

(21) Application number: **22828466.7**

(22) Date of filing: **22.06.2022**

(51) International Patent Classification (IPC):
***C08G 18/79*** *(2006.01)* ***C08G 18/38*** *(2006.01)*
***C08G 18/75*** *(2006.01)* ***C08G 18/76*** *(2006.01)*
***G02B 1/04*** *(2006.01)*

(52) Cooperative Patent Classification (CPC):
**C08G 18/38; C08G 18/75; C08G 18/76; C08G 18/79; G02B 1/04**

(86) International application number:
**PCT/JP2022/024940**

(87) International publication number:
**WO 2022/270550 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 JP 2021103651**

(71) Applicant: **MITSUI CHEMICALS, INC.**
**Tokyo 104-0028 (JP)**

(72) Inventors:
- **TAKAGUCHI, Masayuki**
**Omuta-shi Fukuoka 836-0817 (JP)**
- **KAWAGUCHI, Masaru**
**Tokyo 105-7122 (JP)**

(74) Representative: **Mewburn Ellis LLP**
**Aurora Building**
**Counterslip**
**Bristol BS1 6BX (GB)**

# (54) POLYISOCYANATE COMPOSITION, POLYMERIZABLE COMPOSITION, RESIN, MOLDED BODY, OPTICAL ELEMENT, AND LENS

(57) The polyisocyanate composition contains a polyisocyanate having an isocyanatomethyl group, and a 1-nylon type polymer. The ratio of the mass of the amide bond in the polyisocyanate composition with respect to the mass of the isocyanate group in the polyisocyanate composition is 8000 ppm or less.

EP 4 361 191 A1

## Description

TECHNICAL FIELD

The present invention relates to a polyisocyanate composition, a polymerizable composition, a resin, a molded article, an optical element, and a lens.

BACKGROUND ART

Conventionally, a polyisocyanate composition as a raw material for a resin used for various industrial products has been known.

As the polyisocyanate composition, for example, a xylylene diisocyanate composition has been proposed in which a xylylene diisocyanate and a dichloromethylbenzyl isocyanate are contained and a content ratio of the dichloromethylbenzyl isocyanate is 0.6 ppm or more and 60 ppm or less (ref: for example, Patent Document 1).

Citation List

Patent Document

Patent Document 1: International Patent Publication No. WO 2018/190290

SUMMARY OF THE INVENTION

PROBLEM TO BE SOLVED BY THE INVENTION

A resin produced from the polyisocyanate composition described in Patent Document 1 may be required to improve transparency in accordance with its purpose and application.

The present invention provides a polyisocyanate composition, a polymerizable composition, a resin, a molded article, an optical element, and a lens that are capable of improving transparency of the resin.

MEANS FOR SOLVING THE PROBLEM

The present invention [1] includes a polyisocyanate composition, containing a polyisocyanate having an isocyanatomethyl group; and a 1-nylon type polymer, in which a ratio of a mass of an amide bond in the polyisocyanate composition with respect to a mass of an isocyanate group in the polyisocyanate composition is 8000 ppm or less.

The present invention [2] includes a polyisocyanate composition, containing a polyisocyanate having an isocyanatomethyl group; and a specific compound having an absorption peak with a peak top in a range of 1700 $cm^{-1}$ or more and 1710 $cm^{-1}$ or less in an infrared absorption spectrum, in which, with respect to a mass of an isocyanate group in the polyisocyanate composition, a ratio of a mass of an amide bond in the polyisocyanate composition, the mass of the amide bond being calculated from an absorbance at the peak top of the absorption peak, is 8000 ppm or less.

The present invention [3] includes the polyisocyanate composition described in [1] or [2], in which the ratio is 50 ppm or more.

The present invention [4] includes the polyisocyanate composition described in any one of the above-described [1] to [3], in which the polyisocyanate is a xylylene diisocyanate or a bis(isocyanatomethyl)bicyclo[2.2.1]heptane.

The present invention [5] includes a polymerizable composition, containing the xylylene diisocyanate composition described in any one of the above-described [1] to [4], and an active hydrogen group-containing component.

The present invention [6] includes the polymerizable composition described in [5], in which the active hydrogen-containing component includes at least one kind of polythiol selected from the group consisting of 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

The present invention [7] includes a resin being a cured product of the polymerizable composition described in the above-described [5] or [6].

The present invention [8] includes a molded article being made of the resin described in the above-described [7].

The present invention [9] includes an optical element being the molded article described in the above-described

[8].

The present invention [10] includes a lens being the optical element described in the above-described [9].

EFFECTS OF THE INVENTION

The polyisocyanate composition of the present invention contains a specific compound at a specific ratio. Therefore, the resin produced from the above-described polyisocyanate composition has excellent transparency.

The polymerizable composition of the present invention includes the above-described polyisocyanate composition. Therefore, the resin produced from the above-described polymerizable composition has excellent transparency.

The resin of the present invention is a cured product of the above-described polymerizable composition. Therefore, the resin has excellent transparency.

The molded article of the present invention is made of the above-described resin. Therefore, the molded article has excellent transparency.

The optical element of the present invention is the above-described molded article. Therefore, the optical element has excellent transparency.

The lens of the present invention is the above-described optical element. Therefore, the lens has excellent transparency.

DESCRIPTION OF THE EMBODIMENTS

1. Polyisocyanate composition

The polyisocyanate composition contains a polyisocyanate as a main component, the polyisocyanate has an isocyanatomethyl group.

Examples of the polyisocyanate having an isocyanatomethyl group include diisocyanate represented by the following chemical formula (1).

Chemical formula (1):

[Chem. 1]

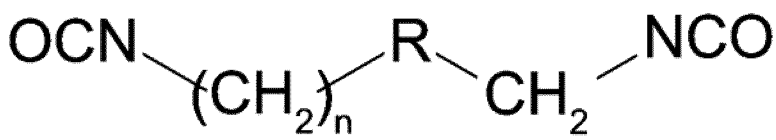

In the above-described chemical formula (1), n is 0 or 1.

In the above-described chemical formula (1), R represents a straight-chain or branched aliphatic group, a cycloaliphatic group, or an aromatic group.

Examples of the straight-chain or branched aliphatic group include straight-chain alkylene group. Examples of the straight-chain alkylene group include propylene group and butylene group.

In the above-described chemical formula (1), when R is a straight-chain or branched aliphatic group, the polyisocyanate is an aliphatic diisocyanate.

Examples of the aliphatic diisocyanate include pentamethylene diisocyanate (PDI) and hexamethylene diisocyanate (HDI).

Pentamethylene diisocyanate is a polyisocyanate of the above-described chemical formula (1) wherein n is 1 and R is a propylene group. Hexamethylene diisocyanate is a polyisocyanate of the above-described chemical formula (1) wherein n is 1 and R is a butylene group.

Examples of the cycloaliphatic group include cyclohexylene group, trimethylcyclohexylene group, andbicyclo[2.2.1]heptylene group.

In the above-described chemical formula (1), when R is a cycloaliphatic group, the polyisocyanate is an alicyclic diisocyanate.

Examples of the alicyclic diisocyanate include bis(isocyanatomethyl)cyclohexane (BIC), isophorone diisocyanate (IPDI, also known as 3-isocyanatomethyl-3,5,5-trimethylcyclohexylisocyanate), and bis(isocyanatomethyl)bicyclo[2,2,1]heptane (BIBH).

Bis(isocyanatomethyl)cyclohexane is a polyisocyanate of the above-described chemical formula (1) wherein n is 1 and R is a cyclohexylene group. Isophorone diisocyanate is a polyisocyanate of the above-described chemical formula (1) wherein n is 0 and R is a trimethyl cyclohexylene group. Bis(isocyanatomethyl)bicyclo[2,2,1]heptane is a polyisocyanate of the above-described chemical formula (1) wherein n is 1 and R is a bicyclo[2.2.1]heptylene group.

Examples of the aromatic group include phenylene group.

In the above-described chemical formula (1), when R is an aromatic group, the polyisocyanate is an araliphatic diisocyanate.

Examples of the araliphatic diisocyanate include xylylene diisocyanate (XDI).

Xylylene diisocyanate is a polyisocyanate of the above-described chemical formula (1) wherein n is 1 and R is a phenylene group.

As the polyisocyanate, preferably, an alicyclic diisocyanate and an araliphatic diisocyanate are used, more preferably, BIBH and XDI are used.

Examples of the BIBH include 2,5-BIBH and 2,6-BIBH. A polyisocyanate composition containing BIBH as a main component is defined as a BIBH composition.

One or two or more kinds of BIBHs may be contained in the BIBH composition. Examples of the XDI include 1,2-XDI (o-XDI), 1,3-XDI (m-XDI), and 1,4-XDI (p-XDI). A polyisocyanate composition containing XDI as a main component is defined as an XDI composition.

One or two or more kinds of XDIs may be contained in the XDI composition.

As the XDI, preferably, 1,3-XDI (m-XDI) is used.

A content ratio (purity) of the polyisocyanate is, for example, 98.00% by mass or more, preferably 99.00% by mass or more, more preferably 99.30% by mass or more, further more preferably 99.60% by mass or more, and for example, 99.95% by mass or less with respect to the total mass of the polyisocyanate composition. That is, the polyisocyanate composition substantially consists of only polyisocyanate. The content ratio of the polyisocyanate can be measured by the method described in the [0377] paragraph of International Patent Publication No. WO 2018/190290.

The polyisocyanate composition contains a specific compound as a secondary component.

The specific compound has a specific absorption peak derived from a carbonyl group in an amide bond in the infrared absorption spectrum. The specific absorption peak has a peak top in the range of from 1700 $cm^{-1}$ or more and 1710 $cm^{-1}$ or less.

The polyisocyanate composition may contain other secondary components except the specific compound.

When the polyisocyanate composition is the XDI composition, examples of the other secondary component include dichloromethylbenzyl diisocyanate (DCI) described in paragraphs [0028] to [0030] of International Patent Publication No. WO 2018/190290, and monochloromethylbenzyl isocyanate (CBI) described in paragraphs [0039] to [0041] of International Patent Publication No. WO 2018/190290.

A content ratio of the DCI is, for example, 0.1 ppm or more, preferably 0.3 ppm or more, more preferably 0.6 ppm or more, more preferably 1.0 ppm or more, and for example, 60 ppm or less, preferably 50 ppm or less, more preferably 30 ppm or less, more preferably 20 ppm or less with respect to the total mass of the XDI composition.

When the content ratio of the DCI is within the above-described range, it is possible to suppress yellowing and/or cloudiness in a resin produced from the XDI composition.

A content ratio of the CBI is, for example, 0.2 ppm or more, preferably 6 ppm or more, more preferably 100 ppm or more, and for example, 5000 ppm or less, preferably 4000 ppm or less, more preferably 3000 ppm or less, particularly more preferably 1600 ppm or less, especially preferably 1000 ppm or less with respect to the total mass of the XDI composition.

The content ratio of the CBI is, for example, twice or more, preferably 10 times or more, more preferably 20 times or more, and for example, 800 times or less, preferably 300 times or less, more preferably 50 times or less than that of the DCI.

When the content ratio of the CBI is within the above-described range, it is possible to reliably suppress yellowing of the resin produced from the XDI composition. In particular, when the content ratio of the CBI is the above-described upper limit or less, it is possible to reliably suppress yellowing of the resin produced from the XDI composition, and also to smoothly proceed with urethane-forming reaction during production of the resin, which in turn can reliably improve mechanical properties of the resin.

The content ratios of the DCI and the CBI can be measured by the method described in Example of International Patent Publication No. WO 2018/190290.

Examples of the specific compound include a 1-nylon type polymer.

The "1-nylon type polymer" is a polymer produced by polymerizing isocyanate monomers with each other, as described in "The Homopolymerization of Monoisocyanates" on page 866 of the "Journal of the American Chemical Society Vol. 82 (1960)", and has an amide bond derived from the reaction between isocyanate groups. The 1-nylon type

polymer has a straight-chain main chain with consecutive amide bonds. The 1-nylon type polymer does not include isocyanurate.

Examples of the 1-nylon type polymer include polyisocyanate homopolymers. Examples of the polyisocyanate homopolymer include a polymer represented by the following chemical formula (2) and a polymer represented by the following chemical formula (3).

Chemical formula (2):

[Chem. 2]

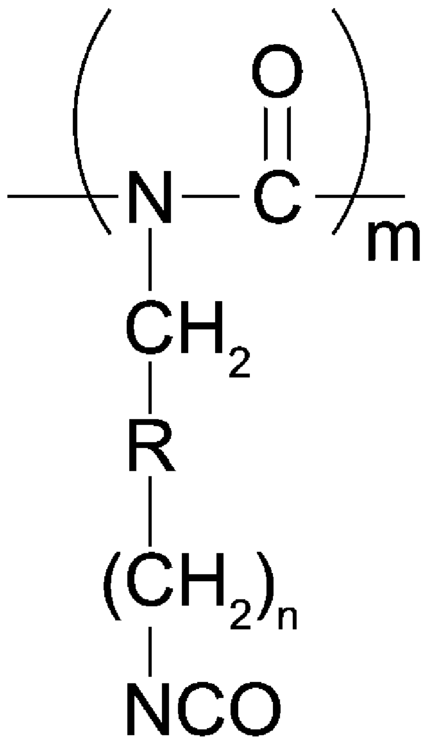

In the above-described chemical formula (2), m is an integer of 2 or more. In the above chemical formula (2), Rand n are the same as Rand n in the above chemical formula (1).

Chemical formula (3):

[Chem. 3]

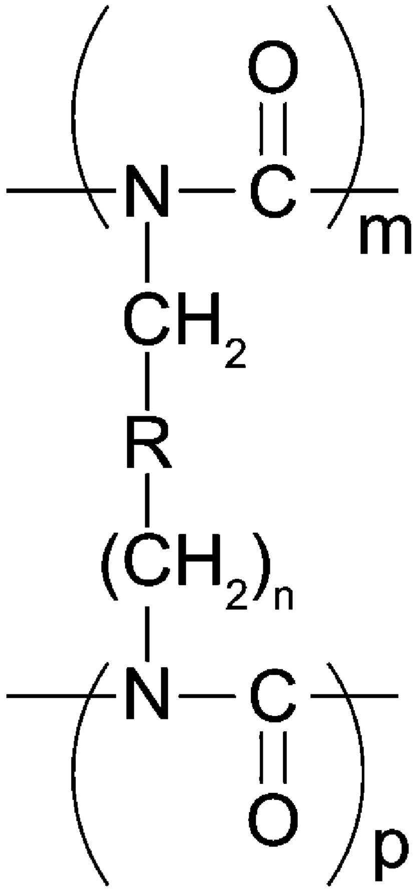

In the above-described chemical formula (3), m and p are integers of 2 or more. p may be a different number than m. In the above chemical formula (3), Rand n are the same as Rand n in the above chemical formula (1).

When the polyisocyanate composition is an XDI composition, and the XDI composition is produced by a production method to be described later and contains the CBI and the DCI as secondary components, the 1-nylon type polymer may be a homopolymer of the above-described XDI or a copolymer having at least two of the following structural units: a structural unit derived from the XDI (see chemical formula (4) below), a structural unit derived from the CBI (see chemical formula (5) below), and a structural unit derived from the DCI (see chemical formula (6) below).

Chemical formula (4):

[Chem. 4]

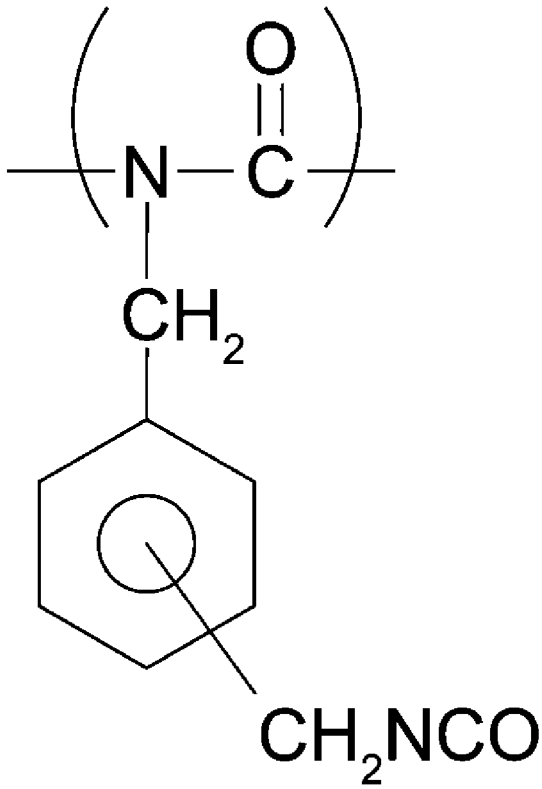

Chemical formula (5):

[Chem. 5]

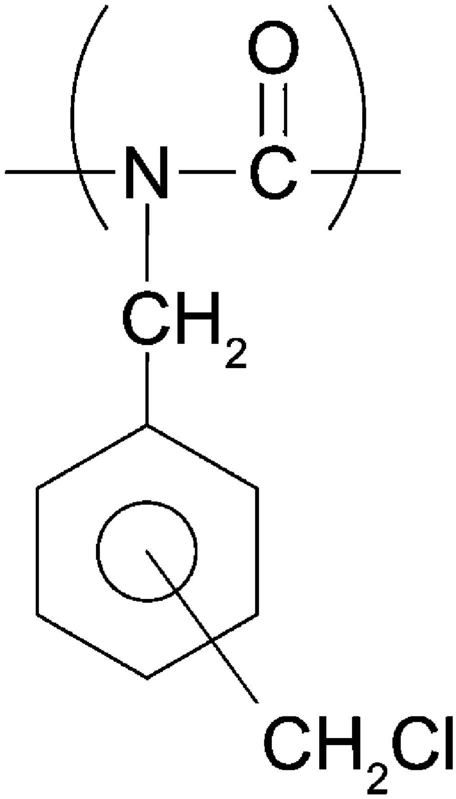

Chemical formula (6):

[0052]

[Chem. 6]

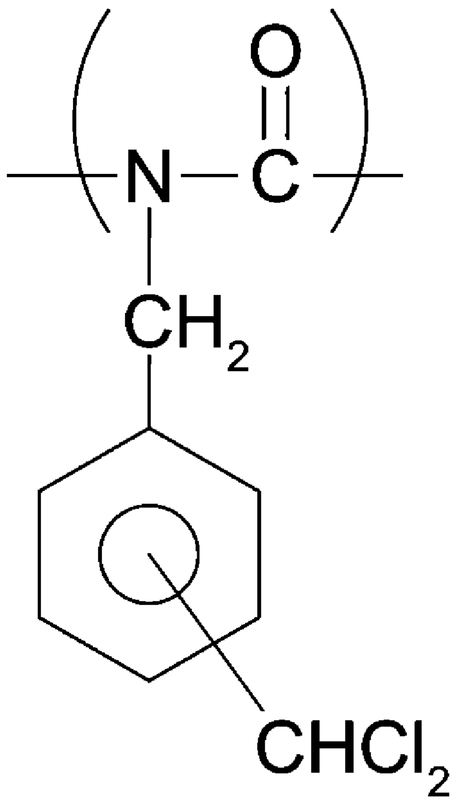

A ratio (B/A) of the mass (B) of the amide bond in the XDI composition to the mass (A) of the isocyanate group in the polyisocyanate composition is, for example, 50 ppm or more, preferably 100 ppm or more, more preferably 150 ppm or more, more preferably 200 ppm or more, more preferably 500 ppm or more, more preferably 1000 ppm or more, more preferably 1500 ppm or more.

Specifically, the ratio (B/A) is expressed by the following equation, as described in Example to be described later.

$$\text{Equation: Ratio (B/A)} = \text{mass (B)}/\text{mass (A)} \times 1000000$$

The mass (A) is a mass of the isocyanate group in the polyisocyanate composition, assuming that the polyisocyanate composition is entirely composed of polyisocyanates. The mass (A) is calculated from the mass of the polyisocyanate sampled, the molecular weight of the polyisocyanate, and the molecular weight of the isocyanate group. The mass (A) is calculated by a calculation method described in Example to be described later.

The mass (B) is calculated from an absorbance at the peak top of the above-described specific absorption peak. The mass (B) is calculated by a calculation method described in Example to be described later. In Example to be described later, the mass (B) is calculated by multiplying the absorbance at the peak top of the absorption peak by an absorption coefficient (of tris(2,3-dibromopropyl)isocyanurate). That is, the mass (B) is a conversion value based on the absorption coefficient of tris(2,3-dibromopropyl)isocyanurate.

When the ratio (B/A) is the above-described lower limit value or more, a haze value of a cured product to be described later can be reduced. Therefore, the transparency of the cured product can be improved.

The haze value can be measured by a method described in Example to be described later.

The ratio (B/A) is 8000 ppm or less, preferably 7500 ppm or less, more preferably 5000 ppm or less, more preferably 4000 ppm or less.

When the ratio (B/A) is the above-described upper limit value or less, the haze value and degree of devitrification of the cured product can be reduced. Therefore, the transparency of the cured product can be improved.

The degree of devitrification can be measured by a method described in Example to be described later.

2. Method for producing polyisocyanate composition

Next, a method for producing a polyisocyanate composition is described.

The method for producing the polyisocyanate composition includes the steps of producing a reaction mass

(composition before purification), purifying the reaction mass, and, if necessary, mixing air to adjust the content ratios of the polyisocyanate and the specific compound within the above-described ranges.

When the polyisocyanate composition is an XDI composition, for example, the reaction mass is produced by the production method described in paragraphs [0054] to [0110] of International Patent Publication No. WO 2018/190290. Specifically, in order to produce the reaction mass, for example, a xylylene diamine and a hydrogen chloride are mixed to form a xylylene diamine hydrochloride salt, and then, the hydrochloride salt and a carbonyl chloride (phosgene) are reacted (phosgenation method of an amine hydrochloride salt).

In the following, the xylylene diamine is referred to as an XDA. Examples of the XDA include 1,2-XDA (o-XDA), 1,3-XDA (m-XDA), and 1,4-XDA (p-XDA), and preferably, 1,3-XDA (m-XDA) is used.

In a salt formation step of forming an XDA hydrochloride salt, for example, the XDA and the hydrogen chloride are mixed in the presence of an inert solvent, to produce (to form) the XDA hydrochloride salt.

Examples of the inert solvent include the inert solvent described in the [0059] paragraph of International Patent Publication No. WO 2018/190290. These inert solvents may be used alone or in combination of two or more. Of the inert solvents, preferably, halogenated aromatic hydrocarbons are used, more preferably, chlorobenzene and dichlorobenzene are used.

Then, a hydrogen chloride gas is supplied to an amine solution in which the XDA is dissolved in the inert solvent. Thereafter, the hydrogen chloride gas and the amine solution are stirred and mixed.

A mass ratio (total amine concentration) of the XDA to the total sum of the mass of the XDA and the inert solvent is, for example, 3% by mass or more, preferably 5% by mass or more, and for example, 30% by mass or less, preferably 20% by mass or less, more preferably 15% by mass or less.

A supply ratio of the hydrogen chloride is, for example, 2 mol or more, and for example, 10 mol or less, preferably 6 mol or less, more preferably 4 mol or less with respect to 1 mol of the XDA.

A salt formation temperature in the salt formation step is, for example, 30°C or more, preferably 50°C or more, and for example, 160°C or less, preferably 150°C or less. A salt formation pressure (gauge pressure) in the salt formation step is, for example, the atmospheric pressure (0 MPaG) or more, preferably 0.01 MPaG or more, and for example, 1.0 MPaG or less, preferably 0.5 MPaG or less.

Thus, the XDA hydrochloride salt is generated from the XDA and the hydrogen chloride (hydrochlorination reaction), thereby producing a slurry containing the XDA hydrochloride salt.

Next, the carbonyl chloride is supplied to the slurry containing the XDA hydrochloride salt to react the XDA hydrochloride salt with the carbonyl chloride (isocyanate-formation reaction, phosgenation).

A supply ratio of the carbonyl chloride is, for example, 4 mol or more, preferably 5 mol or more, more preferably 6 mol or more, and for example, 50 mol or less, preferably 40 mol or less, more preferably 30 mol or less with respect to 1 mol of the XDA hydrochloride salt.

Reaction time of the isocyanate-formation step is, for example, 4 hours or more, preferably 6 hours or more, and for example, 25 hours or less, preferably 20 hours or less, more preferably 15 hours or less.

A reaction temperature in the isocyanate-formation step is, for example, 90°C or more, preferably 100°C or more, more preferably 110°C or more, and for example, 190°C or less, preferably 180°C or less, more preferably 160°C or less.

A reaction pressure (gauge pressure) in the isocyanate-formation step is, for example, above the atmospheric pressure (0 MPaG), preferably 0.0005 MPaG or more, more preferably 0.001 MPaG or more, further more preferably 0.003 MPaG or more, particularly preferably 0.01 MPaG (10 kPaG) or more, especially preferably 0.02 MPaG (20 kPaG) or more, most preferably 0.03 MPaG (30 kPaG) or more, and for example, 0.6 MPaG or less, preferably 0.4 MPaG or less, more preferably 0.2 MPaG or less.

The isocyanate-formation step is preferably carried out by a continuous method. That is, a slurry (XDA hydrochloride salt) generated in a stirring tank is continuously fed from the stirring tank into a reaction tank which is different from the stirring tank, and a reaction solution (reaction mass) is continuously taken out from the reaction tank, while the XDA hydrochloride salt and the carbonyl chloride are reacted in the reaction tank.

Thus, the XDA hydrochloride salt and the carbonyl chloride react, thereby generating the XDI as a main component.

Then, if necessary, a degassing step, a desolvation step, and a tar-removing step are carried out with respect to a reaction solution (reaction mixture). In the degassing step, a gas such as the excessive carbonyl chloride and the hydrogen chloride which is secondarily produced is removed from the reaction solution (reaction mixture) with a known degassing column. In the desolvation step, an inert solvent is distilled off from the reaction solution with a known distillation column. In the tar-removing step, a tar component is removed from the reaction solution with a known tar-removing device.

As described above, the reaction mass containing the XDI is produced.

A content ratio of the XDI in the reaction mass is, for example, 80.0% by mass or more, preferably 90.0% by mass or more, more preferably 95.0% by mass or more, and for example, 99.0% by mass or less, preferably 98.5% by mass or less, more preferably 98.0% by mass or less.

When the polyisocyanate composition is a BIBH composition, the reaction mass can also be produced by the hydrochloride salt method in the same manner as the XDI composition. Specifically, when the polyisocyanate composition is a BIBH composition, the reaction mass is produced by the production method described in the [0072] paragraph of International Patent Publication No. WO 2007/010996.

Next, the reaction mass is purified.

An example of a method for purifying the reaction mass includes distillation. In order to purify the reaction mass by distillation, for example, a low boiling material (low boiling point component) is distilled off from the reaction mass by distillation, and then, a low-boiling removed mass which is a reaction mass after low-boiling removing is rectified.

In the low-boiling removing step, for example, the reaction mass is distilled with a low-boiling removal column to distill off the low boiling material.

Examples of the low-boiling removal column include a plate column and a packed column, and preferably, a packed column is used. The number of theoretical plates in the low-boiling removal column is, for example, 3 plates or more, preferably 5 plates or more, more preferably 7 plates or more, and for example, 40 plates or less, preferably 20 plates or less, more preferably 15 plates or less.

A column bottom temperature of the low-boiling removal column is, for example, 130°C or more, preferably 140°C or more, more preferably 150°C or more, and for example, 200°C or less, preferably 190°C or less, more preferably 180°C or less.

A column top temperature of the low-boiling removal column is, for example, 90°C or more, preferably 100°C or more, more preferably 110°C or more, and for example, 160°C or less, preferably 150°C or less, more preferably 140°C or less.

A column top pressure of the low-boiling removal column is, for example, 0.05 kPa or more, preferably 0.1 kPa or more, more preferably 0.2 kPa or more, and for example, 3.0 kPa or less, preferably 2.0 kPa or less, more preferably 1.0 kPa or less.

A column top reflux ratio of the low-boiling removal column is, for example, 1 or more, preferably 5 or more, more preferably 10 or more, and for example, 80 or less, preferably 60 or less, more preferably 50 or less.

Retention time of the low-boiling removal column is, for example, 0.1 hours or more, preferably 0.2 hours or more, more preferably 0.3 hours or more, and for example, 10 hours or less, preferably 5 hours or less, more preferably 3 hours or less.

Thus, the low boiling material is distilled off, thereby obtaining the low-boiling removed mass as column bottoms.

Then, in the rectifying step, for example, the low-boiling removed mass is distilled with a rectifying column, and a fraction is taken out.

Examples of the rectifying column include a plate column and a packed column, and preferably, a packed column is used. The number of theoretical plates in the rectifying column is, for example, 1 plate or more, and for example, 20 plates or less, preferably 10 plates or less, more preferably 5 plates or less.

A column bottom temperature of the rectifying column is, for example, 120°C or more, preferably 130°C or more, more preferably 140°C or more, and for example, 190°C or less, preferably 180°C or less, more preferably 170°C or less.

A column top temperature of the rectifying column is, for example, 90°C or more, preferably 110°C or more, more preferably 130°C or more, and for example, 180°C or less, preferably 170°C or less, more preferably 160°C or less.

A column top pressure of the rectifying column is, for example, 0.05 kPa or more, preferably 0.1 kPa or more, more preferably 0.2 kPa or more, and for example, 3.0 kPa or less, preferably 2.0 kPa or less, more preferably 1.0 kPa or less.

A column top reflux ratio of the rectifying column is, for example, 0.1 or more, preferably 0.2 or more, more preferably 0.3 or more, and for example, 50 or less, preferably 20 or less, more preferably 10 or less.

Retention time of the rectifying column is, for example, 0.2 hours or more, preferably 0.5 hours or more, more preferably 1.0 hour or more, and for example, 20 hours or less, preferably 10 hours or less.

As described above, the polyisocyanate composition is taken out as a fraction.

Next, if necessary, air is mixed with the polyisocyanate composition thus taken out to adjust the content ratios of the polyisocyanate and the specific compound within the above-described ranges. By filtering the polyisocyanate composition, the specific compound in the polyisocyanate composition is reduced, so that the content ratio of the specific compound may be adjusted within the above-described range.

The air is preferably dry air.

A relative humidity of the air is, for example, 95% or less, preferably 85% or less. The lower limit of the relative humidity of the air is not limited. The relative humidity of the air is, for example, 15% or more.

A temperature of the air is, for example, 5°C or more, preferably 10°C or more, and for example, 30°C or less, preferably 25°C or less.

An example of a method for mixing air with the XDI composition include a method for blowing air into the XDI composition through a glass air blowing tube.

<Function and Effect>

The polyisocyanate composition of the present invention contains a specific compound at a specific ratio.
Specifically, the specific compound is a 1-nylon type polymer and has an absorption peak with a peak top in the range of 1700 $cm^{-1}$ or more and 1710 $cm^{-1}$ or less in the infrared absorption spectrum.
A ratio of the mass of the amide bond in the polyisocyanate composition with respect to the mass of the isocyanate group in the polyisocyanate composition is 8000 ppm or less.
Therefore, the resin produced from the above-described polyisocyanate composition has excellent transparency.

3. Polymerizable composition

The above-described polyisocyanate composition is used as a raw material for a resin, and in particular, is preferably used as a raw material for an optical material. In other words, the polyisocyanate composition is preferably contained in the polymerizable composition as an isocyanate component.
The polymerizable composition contains an isocyanate component and an active hydrogen group-containing component.
The isocyanate component contains the polyisocyanate composition, and preferably consists of the polyisocyanate composition.
Examples of the active hydrogen group-containing component include polyol components, polythiol components, and polyamine components.
These active hydrogen group-containing components may be used alone or in combination of two or more.
Of the active hydrogen group-containing components, for example, from the viewpoint of optical properties, preferably, polythiol components are used.
Examples of the polythiol component include aliphatic polythiol compounds, aromatic polythiol compounds, and heterocyclic polythiol compounds.
Examples of the aliphatic polythiol compound include methane dithiol, 1,2-ethanedithiol, 1,2,3-propanetrithiol, 1,2-cyclohexanedithiol, bis(2-mercaptoethyl)ether, tetrakis(mercaptomethyl)methane, diethylene glycolbis(2-mercaptoacetate), diethylene glycolbis(3-mercaptopropionate), ethylene glycolbis(2-mercaptoacetate), ethylene glycolbis(3-mercaptopropionate), trimethylolpropane tris(2-mercaptoacetate), trimethylolpropane tris(3-mercaptopropionate), trimethylolethane tris(2-mercaptoacetate), trimethylolethane tris(3-mercaptopropionate), pentaerythritol tetrakis(2-mercaptoacetate), pentaerythritol tetrakis(3-mercaptopropionate), bis(mercaptomethyl)sulfide, bis(mercaptomethyl)disulfide, bis(mercaptoethyl)sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, and esters of these thioglycolic acids and mercaptopropionic acids, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), thiodiglycol acid bis(2-mercaptoethyl ester), thiodipropion acid bis(2-mercaptoethyl ester), dithiodiglycol acid bis(2-mercaptoethyl ester), dithiodipropion acid bis(2-mercaptoethyl ester), 1,1,3,3-tetrakis(mercaptomethylthio)propane, 1,1,2,2-tetrakis(mercaptomethylthio)ethane, 4,6-bis(mercaptomethylthio)-1,3 -dithiane, 2-(2,2-bis(mercaptomethylthio)ethyl)-1,3 -dithiethane, 3-mercaptomethyl-1,5-dimercapto-2,4-dithiapentane, tris(mercaptomethylthio)methane, and tris(mercaptoethylthio)methane.
Examples of the aromatic polythiol compound include 1,2-dimercaptobenzene, 1,3-dimercaptobenzene, 1,4-dimethylcaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluenedithiol, 3,4-toluenedithiol, 1,5-naphthalenedithiol, and 2,6-naphthalenedithiol.
Examples of the heterocyclic polythiol compound include 2-methylamino-4,6-dithiol-sym-triazine, 3,4-thiophenedithiol, and bismuthiol.
These polythiol components may be used alone or in combination of two or more.
As the polythiol component, preferably at least one kind selected from the group consisting of 5,7-dimercaptomethyl-1,11-dimercapto-3,6,9-trithiaundecane, 4,7-dimercaptomethyl-1,11-dimercapto-3,6, 9-trithiaundecane, 4,8-dimercaptomethyl-1,11-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, ethylene glycol bis(3-mercaptopropionate), and diethylene glycol bis(3-mercaptopropionate) is used.

3. Resin

By reacting the above-described isocyanate component with the above-described active hydrogen group-containing component, the resin is produced. In other words, the resin is a cured product of the polymerizable composition. The resin is suitable as an optical material because of its excellent transparency.

Specifically, a haze value of the resin is, for example, 0.70 or less, preferably 0.60 or less, more preferably 0.50 or less, more preferably 0.40 or less, more preferably 0.35 or less. When the haze value is the above-described upper limit value or less, the resin has excellent transparency.

The lower limit value of the haze value of the resin is not limited. The haze value of the resin is, for example, 0.10 or more.

A degree of devitrification of the resin is, for example, 30 or less, preferably 25 or less, more preferably 22 or less, more preferably 21 or less. When the degree of devitrification is the above-described upper limit value or less, the resin has excellent transparency.

The lower limit value of the degree of devitrification of the resin is not limited. The degree of devitrification of the resin is, for example, 10 or more.

The resin is preferably molded by a known molding method. That is, a molded article is made of the resin. The molded article is suitable as an optical component. Examples of the molded article of the resin include optical elements.

Examples of the optical element include lens, sheet, and film, and preferably, lens is used.

The lens is produced, for example, by reaction of the above-described polyisocyanate composition with the above-described polythiol component. For example, a casting method may be used in the production of the lens.

Examples of the lens include transparent lens, sunglass lens, polarized lens, spectacle lens, camera lens, pick-up lens, and contact lens.

<Function and Effect>

The resin, the molded article, the optical element, and the lens described above contain the cured product of the polymerizable composition described above. Therefore, the resin, the molded article, the optical element, and the lens have excellent transparency.

The above-described polyisocyanate composition can be also used as a raw material for coating (e.g., paint and adhesive). In this case, the polyisocyanate composition is modified by a known method if necessary, and is contained as an isocyanate component in the polymerizable composition for coating.

A xylylene diisocyanate modified composition (hereinafter, referred to as a polyisocyanate modified composition) is produced by modifying the above-described polyisocyanate composition, and contains at least one kind of functional groups of the following (a) to (i):

(a) isocyanurate group
(b) allophanate group
(c) biuret group
(d) urethane group
(e) urea group
(f) iminooxadiazinedione group
(g) uretdione group
(h) uretonimine group
(i) carbodiimide group

More specifically, the polyisocyanate modified composition containing the functional group of the above-described (a) (isocyanurate group) contains a trimer of the polyisocyanate, and can be obtained, for example, by adding a known isocyanuration catalyst to a polyisocyanate monomer composition to be reacted, and subjecting the polyisocyanate to isocyanuration (e.g., trimerization) of the polyisocyanate.

The polyisocyanate modified composition containing the functional group of the above-described (b) (allophanate group) contains an allophanate modified product of the polyisocyanate, and can be obtained, for example, by reacting the polyisocyanate monomer composition with a monohydric alcohol or a dihydric alcohol, and then, adding a known allophanatization catalyst to be further reacted.

The polyisocyanate modified composition containing the functional group of the above-described (c) (biuret group) contains a biuret modified product of the polyisocyanate, and can be obtained, for example, by reacting the polyisocyanate monomer composition with water or a secondary amine, and then, adding a known biuret-forming catalyst to be further reacted.

The polyisocyanate modified composition containing the functional group of the above-described (d) (urethane group) contains a polyol modified product of the polyisocyanate, and can be obtained, for example, by reaction of the polyisocyanate monomer composition with a low molecular weight polyol (e.g., trimethylolpropane).

The polyisocyanate modified composition containing the functional group of the above-described (e) (urea group) contains a polyamine modified product of the polyisocyanate, and can be obtained, for example, by reaction of the polyisocyanate monomer composition with a polyamine.

The polyisocyanate modified composition containing the functional group of the above-described (f) (iminooxadiazinedione group) contains an iminooxadiazinedione modified product (asymmetric trimer) of the polyisocyanate, and can be obtained, for example, by reacting the polyisocyanate composition in the presence of a known iminooxadiazinedionization catalyst and subjecting the polyisocyanate to iminooxadiazinedionization (e.g., trimerization).

The polyisocyanate modified composition containing the functional group of the above-described (g) (uretdione group) contains a uretdione modified product of the polyisocyanate, and can be obtained, for example, by a method of applying heat to the polyisocyanate composition at around 90°C to 200°C, or reacting the polyisocyanate composition in the presence of a known uretdionization catalyst and subjecting the polyisocyanate to uretdionization (e.g., dimerization).

The polyisocyanate modified composition containing the functional group of the above-described (h) (uretonimine group) contains a uretonimine modified product of the polyisocyanate, and can be obtained, for example, by reacting the polyisocyanate composition in the presence of a known carbodiimidation catalyst to form a carbodiimide group, and then, adding the polyisocyanate to the carbodiimide group.

The polyisocyanate modified composition containing the functional group of the above-described (i) (carbodiimide group) contains a carbodiimide modified product of the polyisocyanate, and can be obtained, for example, by reacting the polyisocyanate composition in the presence of a known carbodiimidation catalyst.

The polyisocyanate modified composition may contain at least one kind of functional groups of the above-described (a) to (i), or may contain two or more kinds of them. The polyisocyanate modified compositions can be used alone or in combination of two or more.

The polymerizable composition for coating is, for example, a two-component curable resin raw material, and contains an A agent as a curing agent and a B agent as a main agent.

The A agent contains, for example, the above-described polyisocyanate modified composition. The B agent contains, for example, a polyol component.

The coating formed from the polymerizable composition for coating has also excellent transparency.

## Example

Hereinafter, the present invention will be described more in detail with reference to examples, but not limited to the examples. The specific numerical values in blending ratio (content ratio), physical property value, and parameter used in the following description can be replaced with upper limit values (numerical values defined as "or less" or "below") or lower limit values (numerical values defined as "or more" or "above") of corresponding numerical values in blending ratio (content ratio), physical property value, and parameter described in the above-described "DESCRIPTION OF THE EMBODIMENTS". The "parts" and "%" are based on mass unless otherwise specified.

### 1. Production of XDI composition

An XDI composition was produced by the method described in International Patent Publication No. WO 2018/190290.

Next, the obtained XDI composition was mixed with a predetermined amount of air to adjust a "ratio of the amide bond in the XDI composition with respect to the mass of the isocyanate group in the XDI composition" to the ratio shown in Table 1.

Specifically, a predetermined amount of air was mixed into the XDI composition by allowing air to pass through an anhydrous calcium chloride tube for drying, and then blowing the dry air through a glass blowing tube into the XDI composition filled in a glass container under an atmosphere at 25°C.

Thus, XDI compositions of Examples 1 to 7 and Comparative Example 1 were obtained.

In Table 1, the "ratio of the amide bond in the XDI composition with respect to the mass of the isocyanate group in the XDI composition" is described as "1-Nylon/NCO".

2. Production of BIBH composition

A BIBH composition was produced by the method described in Example 4 of International Patent Publication No. WO 2007/010996.

Next, the obtained BIBH composition was mixed with a predetermined amount of air to adjust a "ratio of the amide bond in the BIBH composition with respect to the mass of the isocyanate group in the BIBH composition" to the ratio shown in Table 2.

Specifically, a predetermined amount of air was mixed into the BIBH composition by allowing air to pass through an anhydrous calcium chloride tube for drying, and then blowing the dry air through a glass blowing tube into the BIBH composition filled in a glass container under an atmosphere at 25°C.

Thus, BIBH compositions of Examples 8 to 14 and Comparative Examples 2 and 3 were obtained.

In Table 2, the "ratio of the amide bond in the BIBH composition with respect to the mass of the isocyanate group in the BIBH composition" is described as "1-Nylon/NCO".

2. Production of plastic lens

(1) Production of plastic lens using XDI composition

Into 50.8 parts by mass of the XDI composition of "1-Nylon/NCO" shown in Table 1, 0.01 parts by mass of dimethyltin dichloride as a curing catalyst, 0.10 parts by mass of ZELEC UN (trade name, manufactured by Stepan Company; acid phosphate ester), and 1.5 parts by mass of Viosorb 583 (manufactured by SAKAI CHEMICAL INDUSTRY CO., LTD., ultraviolet absorber) were mixed at 20°C and dissolved, thereby obtaining a liquid mixture 1.

Next, 49.2 parts by mass of a polythiol composition containing 4,8-dimercaptomethyl-1,11-dimercapto-3,6,9-trithiandecane, 4,7-dimercaptomethyl-1,11-dimercapto-3,6,9-trithiandecane, and 5,7-dimercaptomethyl-1,11-dimercapto-3,6,9-trithiandecane as a main component was homogeneously mixed into the liquid mixture 1, thereby obtaining a liquid mixture 2.

The liquid mixture 2 was defoamed at 600 Pa for one hour, and thereafter, filtration was carried out with a 1-μm Teflon (registered trademark) filter.

Then, the filtered liquid mixture 2 was injected into a mold made of a glass mold and a tape.

The mold into which the liquid mixture 2 was injected was then put into an oven, and the temperature thereof was increased from 25°C to 120°C to be polymerized at 120°C for 24 hours.

After completion of the polymerization, the mold was taken out from the oven, a polymerization product was removed from the mold, and the obtained polymerization product was annealed at 120°C for one hour.

As described above, cured products of Examples 1 to 7 and Comparative Example 1 were obtained.

(2) Production of plastic lens using BIBH composition

Into 50.6 parts by mass of the BIBH composition of "1-Nylon/NCO" shown in Table 2, 0.02 parts by mass of dimethyltin dichloride as a curing catalyst and 0.10 parts by mass of ZELEC UN (trade name, manufactured by Stepan Company; acid phosphate ester) were mixed at 20°C and dissolved, thereby obtaining a liquid mixture 1.

Next, 25.5 parts by mass of a polythiol composition containing 4-mercaptomethyl-1,8-dimercapto-3,6-dithiaoctane as a main component and 23.9 parts by mass of a polythiol composition containing pentaerythritol tetrakis(3-mercaptopropionate) as a main component were added to the liquid mixture 1 and mixed with stirring at 20°C, thereby obtaining a liquid mixture 2 which is a transparent homogeneous solution.

The liquid mixture 2 was defoamed at 600 Pa for one hour.

Then, the liquid mixture 2 was injected into a mold made of a glass mold and a tape.

The mold into which the liquid mixture 2 was injected was then put into an oven, and the temperature thereof was increased from 25°C to 120°C to be polymerized at 120°C for 24 hours.

After completion of the polymerization, the mold was taken out from the oven, and a polymerization product was removed from the mold, and the obtained polymerization product was annealed at 120°C for one hour.

As described above, cured products of Examples 8 to 14 and Comparative Examples 2 and 3 were obtained.

3. Measurement method

(1) 1-Nylon/NCO

A calibration curve was prepared using tris(2,3-dibromopropyl)isocyanurate (manufactured by Tokyo Chemical Industry Co., Ltd.).

The tris(2,3-dibromopropyl)isocyanurate has an absorption peak (1694 $cm^{-1}$) of a carbonyl group, which is close to the absorption peak (1700 $cm^{-1}$ to 1710 $cm^{-1}$) of the carbonyl group in the 1-nylon type polymer in the XDI or the BIBH. Therefore, the calibration curve prepared using the tris(2,3-dibromopropyl)isocyanurate was used as a calibration curve for quantifying the 1-nylon type polymer in the XDI or the BIBH.

For each of Examples and Comparative Examples, a predetermined amount (mg) of the XDI or BIBH composition was sampled and diluted with chloroform, and the infrared absorption spectrum was measured by a Fourier transform infrared spectrophotometer (manufactured by JASCO Corporation, Model 61000) using a 2.0 mm-thick NaCl cell.

In all of the infrared absorption spectra in Examples and Comparative Examples, an absorption peak with a peak top in the range of 1700 $cm^{-1}$ or more and 1710 $cm^{-1}$ or less appeared.

The absorbance at the peak top of the absorption peak was multiplied by the inclination of the above-described calibration curve (i.e., absorption coefficient) to calculate the mass (B) of the amide bond in the XDI or BIBH composition. That is, the mass (B) is a conversion value based on the absorption coefficient of tris(2,3-dibromopropyl)isocyanurate.

The 1-nylon/NCO (ppm) was calculated from the following equation (1).

1-Nylon/NCO(ppm) = mass (B) of amide bond in XDI or BIBH composition/mass (A) of isocyanate group in XDI or BIBH composition x 1000000 Equation (1):

The mass (A) of the isocyanate group in the XDI composition is determined by the following equation (2). The mass (A) of the isocyanate group in the BIBH composition is determined by the following equation (3).

Mass (A) of isocyanate group in XDI composition = amount of XDI composition sampled (mg) x (42 x 2/188.2) Equation (2):

In the above equation (2), "42" is the molecular weight of the isocyanate group and "188.2" is the molecular weight of XDI.

Mass (A) of isocyanate group in BIBH composition = amount of BIBH composition sampled (mg) x (42 x 2/206.25) Equation (3):

In the above equation (3), "42" is the molecular weight of the isocyanate group and "206.25" is the molecular weight of BIBH.

The results are shown in Tables 1 and 2.

(2) Haze value

Each of the cured products of Examples 1 to 7 and Comparative Example 1 were molded into 2.5 mm-thick flat plates, and the cured products of Examples 8 to 14 and Comparative Examples 2 and 3 were molded into 2.0 mm-thick flat plates. Then, the haze values thereof were measured using a haze meter (model number: NDH 2000) manufactured by Nippon Denshoku Industries, Co., Ltd. The smaller the haze value, the more excellent the transparency of the lens. The results are shown in Tables 1 and 2.

(3) Degree of devitrification

Each of the cured products of Examples 1 to 7 and Comparative Example 1 was molded into a plastic lens having a disc shape (of 9 mm thickness and 75 mm diameter).

Next, light from a light source (Luminar Ace LA-150A manufactured by HAYASHI-REPIC CO., LTD.) was transmitted through the lens.

An image of the light transmitted through the disc lens was captured on an image processor (manufactured by Ube Information Systems, Inc.), and the captured image was subjected to gray scale processing.

The gray scale of the image thus processed was converted into numbers for each pixel, and the average of

the numerical values of the gray scale of each pixel was calculated. The obtained average value is a degree of devitrification of the lens. The smaller the degree of devitrification, the more excellent the transparency of the lens. The results are shown in Table 1.

(4) Yellow index value (Y. I. value)

Each of the cured products of Examples 8 to 14 and Comparative Examples 2 and 3 was molded into a plastic lens (optical element) having a disc shape (of 9 mm thickness and 75 mm diameter).

The Y. I. value of the transmission of the obtained plastic lens was measured using a spectrophotometer CM-5 (manufactured by Konica Minolta, Inc.).

The smaller the Y. I. value, the better the hue of the plastic lens, and the larger the Y. I. value, the poorer the hue. The results are shown in Table 2.

**[Table 1]**

TABLE 1

| | 1-Nylon/NCO [ppm] | Haze value | Degree of devitrification |
|---|---|---|---|
| Ex. 1 | 7379 | 0.45 | 22 |
| Ex. 2 | 5469 | 0.42 | 23 |
| Ex. 3 | 3558 | 0.34 | 21 |
| Ex. 4 | 1648 | 0.39 | 22 |
| Ex. 5 | 500 | 0.42 | 22 |
| Ex. 6 | 200 | 0.43 | 22 |
| Ex. 7 | 100 | 0.55 | 22 |
| Comp. Ex. 1 | 9291 | 0.73 | 32 |

**[Table 2]**

TABLE 2

| | 1-Nylon/NCO [ppm] | Haze value | Y. T I. value |
|---|---|---|---|
| EX. 8 | 50 | 0.23 | 0.56 |
| EX. 9 | 253 | 0.23 | 0.54 |
| EX. 10 | 503 | 0.23 | 0.53 |
| EX. 11 | 1503 | 0.23 | 0.56 |
| EX. 12 | 3003 | 0.22 | 0.60 |
| EX. 13 | 5003 | 0.19 | 0.66 |
| EX. 14 | 7253 | 0.23 | 0.71 |
| Comp. Ex. 2 | 9253 | 0.31 | 0.80 |
| Comp. Ex. 3 | 11000 | 0.40 | 0.86 |

While the illustrative embodiments of the present invention are provided in the above description, such is for illustrative purpose only and it is not to be construed restrictively. Modification and variation of the present invention that will be obvious to those skilled in the art is to be covered by the following claims.

Industrial Applicability

The polyisocyanate composition, polymerizable composition, resin, and molded article of the present invention are used in optical elements such as lenses, sheets and films.

## Claims

1. A polyisocyanate composition, comprising:

   a polyisocyanate having an isocyanatomethyl group; and
   a 1-nylon type polymer,
   wherein a ratio of a mass of an amide bond in the polyisocyanate composition with respect to a mass of an isocyanate group in the polyisocyanate composition is 8000 ppm or less.

2. A polyisocyanate composition, comprising:

   a polyisocyanate having an isocyanatomethyl group; and
   a specific compound having an absorption peak with a peak top in a range of 1700 $cm^{-1}$ or more and 1710 $cm^{-1}$ or less in an infrared absorption spectrum,
   wherein, with respect to a mass of an isocyanate group in the polyisocyanate composition, a ratio of a mass of an amide bond in the polyisocyanate composition, the mass of the amide bond being calculated from an absorbance at the peak top of the absorption peak, is 8000 ppm or less.

3. The polyisocyanate composition according to claim 1 or 2, wherein the ratio of the mass of the amide bond in the polyisocyanate composition is 50 ppm or more.

4. The polyisocyanate composition according to claim 1 or 2, wherein the polyisocyanate is a xylylene diisocyanate or a bis(isocyanatomethyl)bicyclo[2.2.1]heptane.

5. A polymerizable composition comprising:

   a xylylene diisocyanate composition according to claim 1 or 2; and
   an active hydrogen group-containing component.

6. The polymerizable composition according to claim 5, wherein the active hydrogen-containing component includes at least one kind of polythiol selected from the group consisting of 5,7-dimercaptomethyl-1,1 1-dimercapto-3,6,9-trithiaundecane, 4,7-dimercaptomethyl-1,1 1-dimercapto-3,6,9-trithiaundecane, 4,8-dimercaptomethyl-1,1 1-dimercapto-3,6,9-trithiaundecane, 4-mercaptomethyl-1,8-dimercapto-3,6-dithiaoctane, pentaerythritol tetrakis(2-mercaptoacetate), pentaerythritol tetrakis(3-mercaptopropionate), 2,5-bis(mercaptomethyl)-1,4-dithiane, bis(mercaptoethyl)sulfide, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, 1,1,2,2-tetrakis(mercaptomethylthio)ethane, 3-mercaptomethyl-1,5-dimercapto-2,4-dithiapentane, tris(mercaptomethylthio)methane, and ethylene glycol bis(3-mercaptopropionate).

7. A resin being a cured product of the polymerizable composition according to claim 5.

8. A molded article being made of the resin according to claim 7.

9. An optical element being the molded article according to claim 8.

10. A lens being the optical element according to claim 9.

## INTERNATIONAL SEARCH REPORT

International application No.
**PCT/JP2022/024940**

**A. CLASSIFICATION OF SUBJECT MATTER**

***C08G 18/79***(2006.01)i; ***C08G 18/38***(2006.01)i; ***C08G 18/75***(2006.01)i; ***C08G 18/76***(2006.01)i; ***G02B 1/04***(2006.01)i
FI: C08G18/79; C08G18/76 014; C08G18/75 080; C08G18/38 076; G02B1/04

According to International Patent Classification (IPC) or to both national classification and IPC

**B. FIELDS SEARCHED**

Minimum documentation searched (classification system followed by classification symbols)

C08G18/79; C08G18/38; C08G18/75; C08G18/76; G02B1/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2018/070539 A1 (ASAHI KASEI KABUSHIKI KAISHA) 19 April 2018 (2018-04-19) claims 1, 2, 9, paragraphs [0025], [0049]-[0052], [0199], examples 5, 24, 34, 54, 57, 64, 66, 70, tables 1, 5, 8, 13, 14, 16-18 | 1-10 |
| Y | | 4, 6, 9, 10 |
| Y | JP 2017-211547 A (MITSUI CHEMICALS INC) 30 November 2017 (2017-11-30) claims, examples | 4, 6, 9, 10 |
| Y | WO 2017/179575 A1 (MITSUI CHEMICALS INC) 19 October 2017 (2017-10-19) claims, examples | 4, 6, 9, 10 |
| Y | JP 2017-214488 A (MITSUI CHEMICALS INC) 07 December 2017 (2017-12-07) claims, examples | 4, 6, 9, 10 |
| Y | JP 2020-139085 A (MITSUI CHEMICALS INC) 03 September 2020 (2020-09-03) claims, examples | 4, 6, 9, 10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024940**

| Patent document cited in search report | Publication date (day/month/year) | Patent family member(s) | Publication date (day/month/year) |
|---|---|---|---|
| WO 2018/070539 A1 | 19 April 2018 | US 2019/0225739 A1<br>claims 1, 2, 9, paragraphs [0056]-[0059], [0086]-[0090], [0271], examples 5, 24, 34, 54, 57, 64, 66, 70, tables 1, 5, 8, 13, 14, 16-18<br>EP 3527600 A1<br>CN 109803992 A<br>TW 201829516 A | |
| JP 2017-211547 A | 30 November 2017 | (Family: none) | |
| WO 2017/179575 A1 | 19 October 2017 | US 2019/0106529 A1<br>claims, examples<br>EP 3444236 A1<br>KR 10-2018-0104330 A<br>CN 108779066 A | |
| JP 2017-214488 A | 07 December 2017 | (Family: none) | |
| JP 2020-139085 A | 03 September 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018190290 A
- WO 2007010996 A

### Non-patent literature cited in the description

- The Homopolymerization of Monoisocyanates. *Journal of the American Chemical Society,* 1960, vol. 82, 866